# EUROPÄISCHE PATENTSCHRIFT

(11) **EP 4 165 708 B1**
(45) Veröffentlichungstag und Bekanntmachung des Hinweises auf die Patenterteilung: **30.08.2023**
(21) Anmeldenummer: 21730814.7
(22) Anmeldetag: 28.05.2021
(51) Int. Cl.: H01M 8/18

(54) **REDOX-FLOW BATTERIE UND BETRIEBSVERFAHREN**
REDOX-FLOW BATTERY AND OPERATING METHOD
BATTERIE À FLUX REDOX ET PROCÉDÉ DE FONCTIONNEMENT

(30) Priorität: 10.06.2020 DE 102020115385
(43) Veröffentlichungstag der Anmeldung: 19.04.2023
(73) Patentinhaber: Voith Patent GmbH, 89522 Heidenheim (DE)
(72) Erfinder: KRÜGER, Klaus, 73460 Hüttlingen (DE); LÜTH, Thomas, 79104 Freiburg (DE)
(74) Vertreter: Voith Patent GmbH - Patentabteilung
(86) Internationale Anmeldenummer: PCT/EP2021/064331
(87) Internationale Veröffentlichungsnummer: WO 2021/249789

(56) Entgegenhaltungen:
- EP-A1- 2 980 903
- DE-A1-102018 119 930
- JP-A- 2017 174 541
- KR-A- 20160 072 916
- US-A1- 2019 020 045

## Beschreibung

Die Erfindung betrifft eine Redox-Flow Batterie und ein Verfahren zum Betrieb einer solchen Batterie. Die Batterie kann dabei allein oder als Teil eines Batterie-Systems betrieben werden. Ein solches Batterie-System besteht beispielsweise aus einer Serienschaltung von mehreren Redox-Flow Batterien (Batterie-String).

Eine Redox-Flow Batterie umfasst ein Zellanordnung, d.h. eine Anordnung von einer Vielzahl von Redox-Flow Zellen, und eine Tankeinrichtung zum Speichern von Elektrolyt mit wenigstens zwei Tanks, wobei ein erster Tank Anolyt und ein zweiter Tank Katholyt speichert. Während dem Betrieb der Batterie wird Anolyt und Katholyt in zwei getrennten Kreisläufen durch die Zellen gepumpt. Dazu sind zwei Pumpenlaufräder, Mittel zum Antreiben der Pumpenlaufräder und entsprechende Verrohrungen vorgesehen. Die DE 10 2018 119 930 A1 offenbart eine solche Redox-Flow Batterie, wobei die beiden Pumpenlaufräder durch einen Motor gemeinsam angetrieben werden.

Die Aufgabe der vorliegenden Erfindung ist es, die bekannte Redox-Flow Batterie hinsichtlich Betriebszuverlässigkeit und Wartungsfreundlichkeit zu verbessern.

Die Erfinder haben sich von der Beobachtung leiten lassen, dass ein häufiger Fehlerfall bei herkömmlichen Redox-Flow Batterien in Leckagen in den Elektrolyt-Kreisläufen besteht. Dadurch verringert sich die Kapazität der Batterie mit der Zeit, und führt schließlich zum Ausfall der Batterie. Weitere potentielle Fehlerfälle bestehen im Versagen der Antriebsmittel der Pumpenlaufräder. Wenn die Umwälzung des Elektrolyts während dem Betrieb der Batterie ausfällt, kann die Batterie zerstört werden, wenn der Betrieb derselben nicht rechtzeitig unterbrochen wird.

Die Aufgabe wird erfindungsgemäß durch eine Ausführung entsprechend dem unabhängigen Vorrichtungsanspruch und dem Verfahrensanspruch gelöst. Weitere vorteilhafte Ausführungsformen der vorliegenden Erfindung finden sich in den Unteransprüchen.

Die erfindungsgemäßen Lösungen werden im Folgenden anhand von Figuren erläutert. Die Figuren zeigen im Einzelnen:
Fig.1 Redox-Flow Batterie
Fig.2 Messeinrichtungen zur Bestimmung der OCV
Fig. 3 Umwälzmodul in einer ersten Ausführungsform
Fig. 4 Umwälzmodul in einer weiteren Ausführungsform
Fig. 5 Umwälzmodul in einer weiteren Ausführungsform
Fig. 6 Umwälzmodul in einer weiteren Ausführungsform
Fig. 7 Umwälzmodul in einer weiteren Ausführungsform
Fig. 8 Details zur Stromversorgung eines erfindungsgemäßen Umwälzmoduls

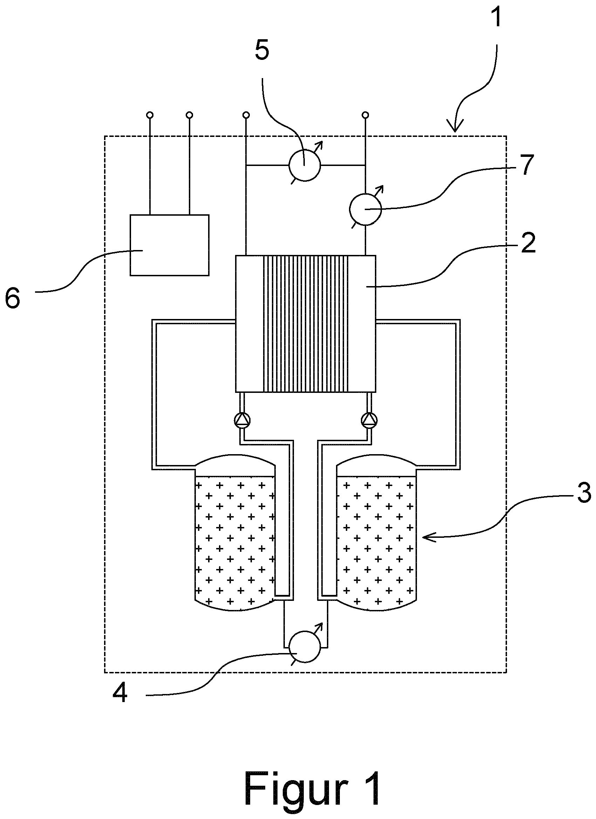

Figur 1 zeigt eine Redox-Flow Batterie, welche mit 1 bezeichnet ist. Die Batterie umfasst eine Zellanordnung, welche mit 2 bezeichnet ist, und eine Tankeinrichtung, welche mit 3 bezeichnet ist. Bei der Zellanordnung 2 handelt es sich um eine Anordnung von einer Vielzahl von Redox-Flow-Zellen, welche beliebig angeordnet sein können. Beispielsweise könnte es sich um einen einzelnen Zell-Stack, eine Serienschaltung von mehreren Stacks, eine Parallelschaltung von mehreren Stacks, oder um eine Kombination von Serien- und Parallelschaltung von mehreren Stacks handeln. Die Tankeinrichtung 3 dient zum Speichern des Elektrolyten und zur Versorgung der Zellanordnung 2 mit Elektrolyt. Dazu umfasst die Tankeinrichtung 3 wenigstens zwei Tanks für Anolyt und Katholyt, ein Rohrsystem zur Verbindung der Tanks mit der Zellanordnung 2 und Pumpenlaufräder zum Fördern des Elektrolyten. Die Batterie 1 umfasst ferner eine Messeinrichtung zur Bestimmung der sogenannten Leerlaufspannung (open circuit voltage - OCV), welche mit 4 bezeichnet ist. Der OCV-Wert ist ein Maß für den Ladezustand des Batteriemoduls (SoC - State of Charge). Die Batterie 1 umfasst außerdem eine externe Stromversorgung, welche durch das Rechteck mit Klemmen und der Bezeichnung 6 angedeutet wird. Die externe Stromversorgung 6 dient u.a. zur Speisung der Antriebsmittel der Pumpenlaufräder und von einer eventuell vorhandenen Lüftungseinrichtung und dergleichen.

Die in Figur 1 dargestellte Batterie umfasst optional zwei weitere Messeinrichtungen, welche mit 5 und 7 bezeichnet sind. Die Messeinrichtung, welche mit 5 bezeichnet ist, ist eine Messeinrichtung zur Bereitstellung der Klemmenspannung der Zellanordnung 2 und damit auch der Batterie 1. Falls die Batterie 1 Teil eines Batterie-Systems ist, welches aus einer Parallelschaltung von mehreren Batterien 1 besteht, dann haben alle Batterien 1 dieselbe Klemmenspannung, so dass eine gemeinsame Messeinrichtung 5 entweder in einer der Batterien 1 oder auch außerhalb von allen Batterien 1 vorgesehen sein kann. Die Messeinrichtung, welche mit 7 bezeichnet ist, ist eine Messeinrichtung zur Bereitstellung des Lade- bzw. Entladestroms der Zellanordnung 2 und damit auch der Batterie 1. Falls die Batterie 1 Teil eines Batterie-Systems ist, welches aus einer Serienschaltung von mehreren Batterien 1 besteht, dann haben alle Batterien 1 denselben Lade- bzw. Entladestrom, so dass eine gemeinsame Messeinrichtung 7 entweder in einer der Batterien oder auch außerhalb von allen Batterien 1 vorgesehen sein kann.

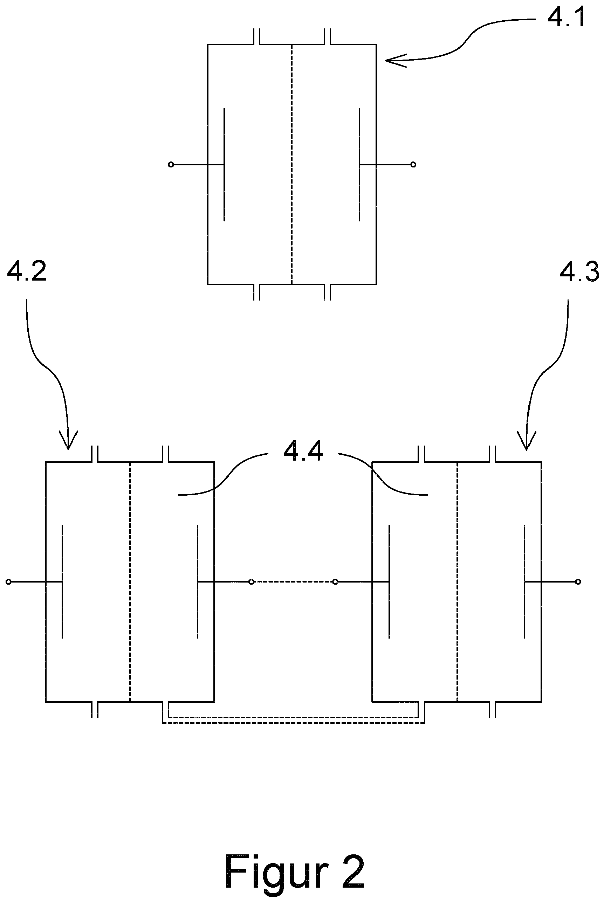

Figur 2 zeigt zwei Ausführungsformen für eine Messeinrichtung 4 zur Bestimmung der OCV. Die im oberen Teil dargestellte Ausführungsform umfasst eine Messzelle, welche mit 4.1 bezeichnet ist. Die Messzelle 4.1 wir durch eine Membran, welche auch Separator genannt wird, in zwei Kammern geteilt. In jeder Kammer ist jeweils eine Elektrode angeordnet. Zwischen den beiden Elektroden kann die Leerlaufspannung abgegriffen werden. Die Messzelle umfasst vier Anschlüsse, wobei je zwei Anschlüsse in jede der beiden Kammern münden. Eine Kammer ist zur Aufnahme von Anolyt bestimmt, wobei ein Anschluss für die Zufuhr und ein Anschluss für die Abfuhr von Anolyt bestimmt sind. Die andere Kammer ist zur Aufnahme von Katholyt bestimmt, wobei ein Anschluss für die Zufuhr und ein Anschluss für die Abfuhr von Katholyt bestimmt sind. Die im unteren Teil von Figur 2 dargestellte Ausführungsform umfasst zwei Messzellen, welche mit 4.2 und 4.3 bezeichnet sind. Jede der Messzellen ist durch eine Membran bzw. einen Separator in zwei Kammern geteilt und in jeder Kammer ist jeweils eine Elektrode angeordnet. Von jeder der Messzellen 4.2 und 4.3 ist je eine Kammer zur Aufnahme von einer Referenzflüssigkeit vorgesehen. Diese Kammern sind mit 4.4 bezeichnet. Die Kammern 4.4 zur Aufnahme von Referenzflüssigkeit können geschlossen sein, d.h. dass die in der Figur gezeigten Anschlüsse verschlossen werden, nachdem die Referenzflüssigkeit eingefüllt worden ist. Die Kammern 4.4 können auch untereinander verbunden sein, wie durch die gestrichelte Leitung unten angedeutet wird. Es können auch Mittel vorgesehen sein, durch die von Zeit zu Zeit frische Referenzflüssigkeit in die Kammern 4.4 eingeführt wird, wobei die verbrauchte Referenzflüssigkeit aus den Kammern 4.4 herausgeführt wird. Die beiden übrigen Kammern haben je zwei Anschlüsse, wobei eine dieser Kammern zur Aufnahme von Anolyt bestimmt ist, und wobei ein Anschluss für die Zufuhr und ein Anschluss für die Abfuhr von Anolyt bestimmt sind. Die andere Kammer ist zur Aufnahme von Katholyt bestimmt, wobei ein Anschluss für die Zufuhr und ein Anschluss für die Abfuhr von Katholyt bestimmt sind. Die Elektroden der Kammern, welche für die Aufnahme der Referenzflüssigkeit bestimmt sind, können wie in Figur 2 gestrichelt dargestellt miteinander verbunden sein, so dass die Leerlaufspannung direkt zwischen den verbleibenden Elektroden abgegriffen werden kann. Alternativ kann die dargestellte Verbindung der mittleren Elektroden entfallen, und es kann je eine Teilspannung zwischen den zwei Elektroden von jeder Zelle abgegriffen werden. Die Leerlaufspannung ergibt sich dann aus der Summe der beiden Teilspannungen. Wenn die beiden Teilspannungen betragsmäßig voneinander abweichen, kann aus der Abweichung auf das Vorliegen einer Verschiebung im Elektrolyt der Batterie geschlossen werden. Eine solche Verschiebung kann sich durch einen unerwünschten Effekt ergeben, welcher als ,crossover' bezeichnet wird. Die Möglichkeit der Detektion einer solchen Verschiebung macht die in Figur 2 unten dargestellte Ausführungsform besonders vorteilhaft.

Beide Ausführungsformen haben gemeinsam, dass die Messeinrichtung 4 zur Bestimmung der Leerlaufspannung wenigstens eine Messzelle und wenigstens vier Anschlüsse umfasst, wobei ein Anschluss für die Zufuhr von Anolyt, ein Anschluss für die Abfuhr von Anolyt, ein Anschluss für die Zufuhr von Katholyt und ein Anschluss für die Abfuhr von Katholyt vorgesehen ist.

Damit eine Messeinrichtung 4 die aktuelle Leerlaufspannung der Batterie zuverlässig ermitteln kann, müssen die für Anolyt und Katholyt vorgesehenen Kammern mit frischem Elektrolyt versorgt werden. Dies geschieht dadurch dass die Messeinrichtung in den Elektrolyt-Kreislauf der Batterie eingebunden wird. Dabei werden die Anschlüsse für die Zufuhr und Abfuhr von Elektrolyt mit Punkten des Elektrolyt-Kreislaufes verbunden, welche eine solche Druckdifferenz aufweisen, dass die Kammern der Messeinrichtung 4 vom Elektrolyt durchströmt werden können. Geeignete Abzweigpunkte mit hohem Druck finden sich in den Leitungen, welche sich von der Druckseite der Pumpenlaufräder bis zur Zellanordnung erstrecken. Geeignete Abzweigpunkte mit niedrigem Druck finden sich in den Leitungen, welche sich von den Tanks bis zu der Saugseite der Pumpenlaufräder bzw. von der Zellanordnung bis zu den Tanks erstrecken. Niedriger Druck herrscht ferne im oberen Teil der Tanks selbst, so dass die Anschlüsse für die Abfuhr von Elektrolyt der Messeinrichtung 4 auch mit diesem Teil der Tanks verbunden sein können. Die Erfinder haben erkannt, dass besonders die Anschlüsse für die Zufuhr von Elektrolyt und die damit verbunden Leitungen für Leckage anfällig sind, da dort ein höherer Innendruck herrscht als bei den Anschlüssen für die Abfuhr von Elektrolyt und den damit verbunden Leitungen.

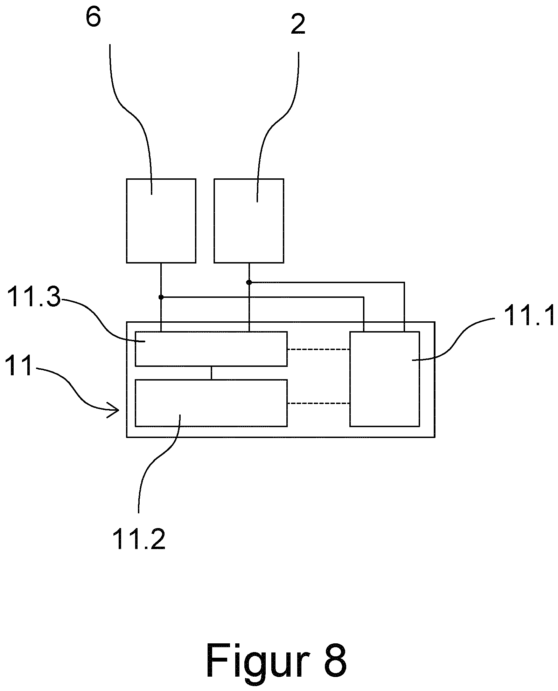

Eine erfindungsgemäße Redox-Flow Batterie umfasst ein Umwälzmodul, welches so ausgebildet ist, dass es Anolyt und Katholyt umwälzen kann. Da die Fördermenge vom Betriebszustand der Batterie abhängt, verfügt das Umwälzmodul über einen drehzahlvariablen Antrieb. Das Umwälzmodul kann extern mit Strom versorgt werden. Dabei kann die externe Stromversorgung 6 in einem Gleich- oder Wechselstromanschluss bestehen. Alternativ kann das Umwälzmodul auch intern mit Strom versorgt werden. Diese Möglichkeiten werden im Zusammenhang mit Figur 8 detailliert beschrieben.

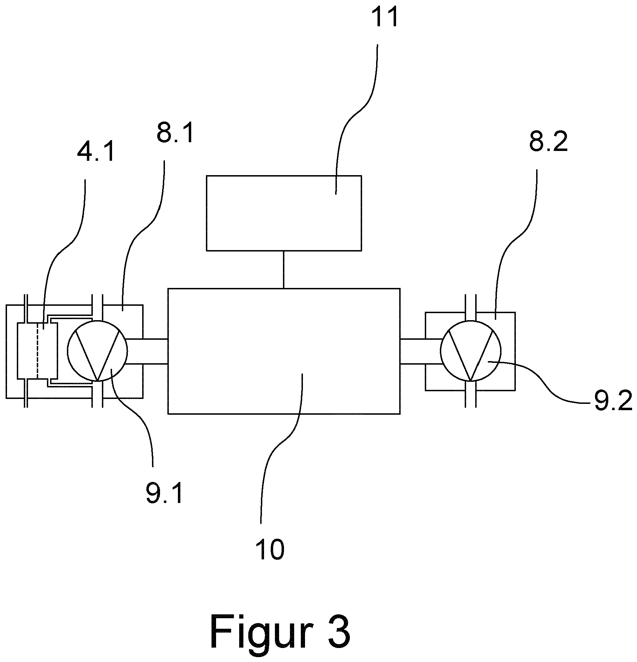

Figur 3 zeigt ein Umwälzmodul in einer ersten Ausführungsform in schematischer Darstellung. Das Umwälzmodul umfasst wenigstens ein erstes Pumpenlaufrad zur Umwälzung von Anolyt, welches mit 9.1 bezeichnet ist, und wenigstens ein zweites Pumpenlaufrad zur Umwälzung von Katholyt, welches mit 9.2 bezeichnet ist. In Figur 3 ist jedes Pumpenlaufrad in je einem Pumpenkopf angeordnet, welche mit 8.1 und 8.2 bezeichnet sind. Das Umwälzmodul umfasst ferner einen drehzahlvariablen Elektromotor, welcher mit 10 bezeichnet und so mit den Pumpenlaufrädern 9.1 und 9.2 verbunden ist, dass er dieselben simultan antreiben kann. In Figur 3 ist die Verbindung mit den Pumpenlaufrädern mittels einer Welle realisiert, welche beidseitig aus dem Motor 10 herausragt (Motor mit durchgehender Welle bzw. mit Doppelwelle). Je ein Pumpenlaufrad ist mit je einem Ende der Welle verbunden. Da bei Redox-Flow Batterien der Elektrolyt in der Regel nicht mit Metall in Berührung kommen darf, kann jeweils zwischen Welle und Pumpenlaufrad eine Magnetkupplung angeordnet sein. In Figur 3 und den folgenden Figuren werden solche Magnetkupplungen der Übersichtlichkeit halber nicht dargestellt. Solche Magnetkupplungen können dabei in den jeweiligen Pumpenkopf integriert sein. Pumpenköpfe und Pumpenlaufräder werden in der Regel aus Kunststoff hergestellt, beispielsweise aus Polypropylen (PP). Dabei können die Pumpenköpfe beispielsweise als zwei Halbschalen aus PP-Blöcken herausgefräst werden. Alternativ können solche Halbschalen auch als Spritzgussteile hergestellt werden. Das Umwälzmodul umfasst ferner eine Steuer- und Speiseeinrichtung, welche mit 11 bezeichnet ist, und welche so ausgebildet und mit dem Elektromotor 10 verbunden ist, dass sie denselben mit einem Wechselstrom mit variabler Frequenz speisen kann. Die Steuer- und Speiseeinrichtung umfasst hierzu in der Regel eine Steuereinheit und eine Speiseeinheit, d.h. einen Frequenzumrichter, welche beide auf einer Platine integriert sein können. Je nachdem ob die externe Stromversorgung 6 in einer Wechsel- oder Gleichstromversorgung bestehen, handelt es sich dabei um einen AC/AC oder um einen DC/AC Umrichter.

Wenn die beiden Pumpenlaufräder identisch ausgebildet sind, dann entspricht die Förderrate von Anolyt der Förderrate von Katholyt. Diese Entsprechung der Förderraten ist für manche Redox-Flow Batterien notwendig, wie z.B. bei Batterien auf der Basis von Vanadium. Andere Batterien erfordern Förderraten mit einem von 1:1 abweichenden Verhältnis. Dies kann entweder dadurch erreicht werden, dass die Pumpenlaufräder unterschiedliche Fördermengen pro Umdrehung aufweisen, oder dadurch, dass zwischen wenigsten einem Laufrad und dem Motor ein Getriebe mit entsprechender Untersetzung zwischengeschaltet wird.

Das in Figur 3 gezeigte Umwälzmodul umfasst eine Messzelle, welche mit 4.1 bezeichnet ist. Dabei ist ein erster Anschluss der Messzelle 4.1 mit der Druckseite des Pumpenlaufrades 9.1 und ein zweiter Anschluss der Messzelle 4.1 mit der Saugseite des Pumpenlaufrades 9.1 verbunden, wobei die genannten Anschlüsse in dieselbe Kammer der Messzelle 4.1 münden und sowohl die Messzelle 4.1 als auch die genannten Verbindungen in den zum Pumpenlaufrad 4.1 gehörigen Pumpenkopf 8.1 integriert sind. Durch die Integration der Messzelle 4.1 und der Verbindungsleitungen zur Druck- und Saugseite des Pumpenlaufrades 9.1 in den Pumpenkopf 8.1 reduziert sich die Anfälligkeit der Batterie gegen Leckage, da extern verlaufende Leitungen mit entsprechenden Anflanschungen entfallen, welche eine höhere Anfälligkeit für Leckage aufweisen, als die erfindungsgemäß in den Pumpenkopf integrierten Verbindungen, welche vorteilhaft als im Pumpenkopf verlaufende Kanäle ausgebildet sein können. Zur Erzielung eines großen Teils des beschriebenen erfindungsgemäßen positiven Effekts genügt es jedoch, wenn allein die auf der Druckseite des Pumpenlaufrades 9.1 mündende Leitung in den Pumpenkopf integriert ist, da dieselbe anfälliger für Leckage ist, als die Leitung, welche Elektrolyt aus der entsprechenden Kammer der Messzelle 4.1 abführt. Die letztgenannte Leitung könnte auch mit einem anderen Punkt niedrigen Druckes des Elektrolytkreislaufes verbunden sein (siehe die Ausführungen oben zu Figur 2). Erfindungsgemäß genügt es also wenn ein (erster) Anschluss der Messzelle 4.1 mit der Druckseite des Pumpenlaufrades 9.1 verbunden ist, und wenn die zugehörige Leitung in den Pumpenkopf 8.1 integriert ist. Besonders vorteilhaft ist es, wenn ein weiterer (zweiter) Anschluss mit der Saugseite des Pumpenlaufrades 9.1 verbunden ist und wenn auch die zugehörige Leitung in den Pumpenkopf 8.1 integriert ist. Entsprechendes gilt auch für die weiter unten beschriebenen weiteren Ausführungsformen des Umwälzmodules.

Die in Figur 3 dargestellte Messzelle 4.1 ist dabei Teil einer Messeinrichtung 4 gemäß der oberen Ausführungsform von Figur 2. Die in Figur 3 offen dargestellten Anschlüsse der Messzelle 4.1 sind dabei so mit dem zum anderen Pumpenkopf 8.2 gehörigen Kreislauf verbunden, dass Elektrolyt aus diesem Kreislauf durch die entsprechende Kammer (d.h. die linke Kammer) der Messzelle 4.1 fließen kann. Diese Leitungen sind der Übersichtlichkeit halber in Figur 3 nicht dargestellt. Dabei kann der Pumpenkopf 8.2 geeignete Anschlüsse zur Verfügung stellen, welche mit der Druck- bzw. Saugseite des Pumpenlaufrades 9.1 in Verbindung stehen. Diese Verbindung kann aber auch anderweitig eingerichtet sein. Da die beiden Pumpenköpfe 8.1 und 8.2 nahe beieinander angeordnet sind, ist die erstgenannte Möglichkeit besonders vorteilhaft und kann mittels starrer am Motorgehäuse entlang verlaufender Leitungen besonders vorteilhaft realisiert sein. Die Ausführungsform nach Figur 3 kann auch eine weitere Messzelle 4.1 gemäß der oberen Ausführungsform von Figur 2 umfassen, welche im Pumpenkopf 8.2 integriert ist. Dadurch ist die Messeinrichtung 4 redundant ausgeführt, so dass beim Versagen einer der Messzellen 4.1 die Batterie trotzdem weiter betrieben werden kann.

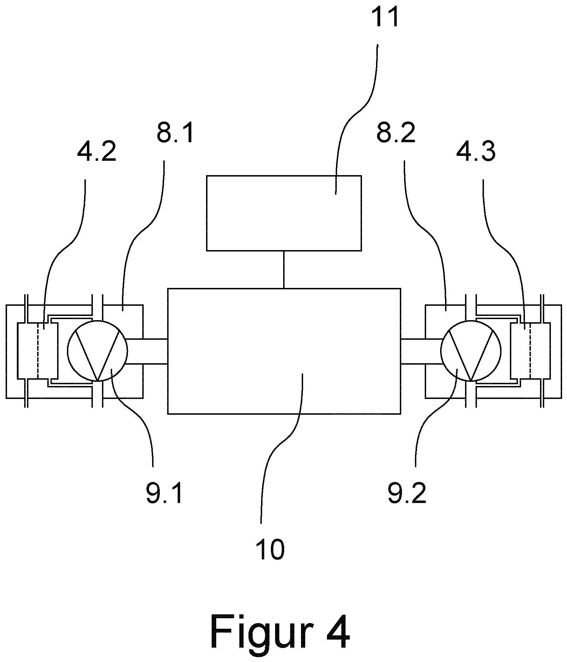

Figur 4 zeigt ein Umwälzmodul in einer weiteren Ausführungsform. Die zugehörige Batterie umfasst dabei eine Messeinrichtung 4 gemäß der unteren Ausführungsform von Figur 2. Dabei ist in jeden der beiden Pumpenköpfe 8.1 und 8.2 je eine der Messzellen 4.2 und 4.3 samt den Verbindungen zu den jeweiligen Druck- und Saugseiten der Pumpenlaufräder 9.1 und 9.2 integriert. Für die in Figur 4 als frei dargestellten Anschlüsse zu den mit der Referenzflüssigkeit gefüllten Kammern der Messzellen 4.2 und 4.3 gilt dabei das in Bezug auf Figur 2 unten Gesagte.

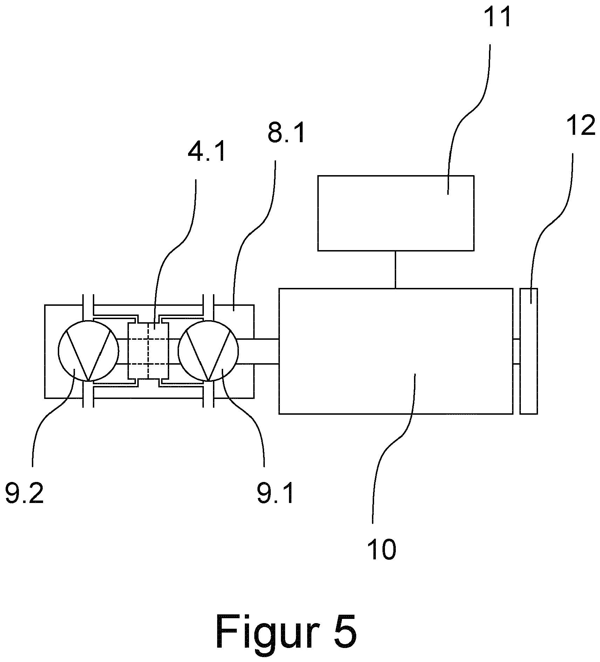

Figur 5 zeigt ein Umwälzmodul in einer weiteren Ausführungsform. Die zugehörige Batterie umfasst dabei eine Messeinrichtung 4 gemäß der oberen Ausführungsform von Figur 2. Im Gegensatz zu den Ausführungsformen gemäß den Figuren 3 und 4 sind die beiden Pumpenlaufräder 9.1 und 9.2 in einem gemeinsamen Pumpenkopf angeordnet, welcher mit 8.1 bezeichnet ist. Die Pumpenlaufräder 9.1 und 9.2 sind so miteinander verbunden, dass wenn der Motor 10 eines der Pumpenlaufräder antreibt, er auch das andere mit antreibt. Die Messzelle 4.1 ist so in den Pumpenkopf 8.1 integriert, dass alle Leitungen zur Messzelle 4.1 innerhalb des Pumpenkopfes 8.1 verlaufen. Die in Figur 5 dargestellte Ausführungsform benötigt daher noch weniger extern verlaufende Verbindungsleitungen als die Ausführungsform gemäß Figur 3.

Außerdem zeigt Figur 5 einen Lüfter, welcher mit 12 bezeichnet ist. Dabei handelt es sich um einen externen Lüfter, welcher mit der Achse des Motors 10 verbunden ist. Die Erfinder haben erkannt, dass eine häufige Ursache für einen Ausfall des Motors 10 darin besteht, dass ein Flügel des Lüfters abbricht. Wenn der Motor einen integrierten Lüfter aufweist, dann muss zur Reparatur der ganze Motor getauscht werden. Bei einem externen Lüfter genügt es, den Lüfter selbst zu tauschen. Ein solcher externer Lüfter kann auch bei allen anderen beschriebenen Ausführungsformen zum Einsatz kommen. Ggf. muss der Lüfter dabei lateral am Motor angeordnet sein und über einen eigenen Antrieb verfügen.

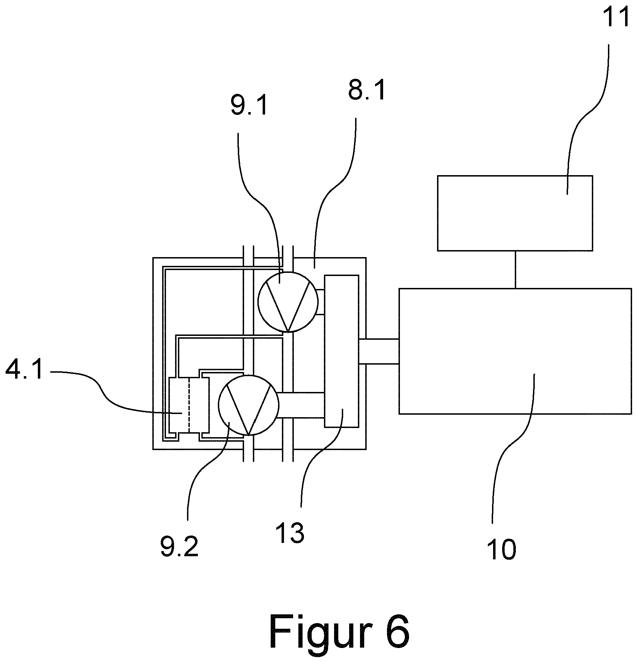

Figur 6 zeigt ein Umwälzmodul in einer weiteren Ausführungsform. Die zugehörige Batterie umfasst dabei eine Messeinrichtung 4 gemäß der oberen Ausführungsform von Figur 2. Die Ausführungsform gemäß Figur 6 unterscheidet sich von der Ausführungsform gemäß Figur 5, dadurch dass die Pumpenlaufräder 9.1 und 9.2 mittels eines Getriebes miteinander verbunden sind, welches mit 13 bezeichnet ist. Dabei handelt es sich um ein Getriebe mit einer Eingangs- und mit zwei Ausgangswellen. Der Motor 10 ist mit der Eingangswelle verbunden. Ein solches Getriebe 13 kann auch vorteilhaft mit den Ausführungsformen gemäß den Figuren 3 und 4 kombiniert werden, so dass auch diese Ausführungsformen mit einem Motor mit nur einseitig herausragender Motorwelle realisiert werden können.

Die Ausführungsformen gemäß den Figuren 5 und 6 können auch vorteilhaft mit Messeinrichtungen 4 gemäß der unteren Ausführungsform von Figur 2 ausgeführt werden, d.h. mit jeweils zwei in den Pumpenkopf 8.1 integrierten Zellen 4.2 und 4.3. Außerdem können alle Ausführungsformen im Prinzip auch mit zwei Motoren ausgeführt werden, so dass je ein Motor je ein Pumpenlaufrad antreibt. Es ist jedoch natürlich kostengünstiger, wenn nur ein Motor verwendet wird, welcher beide Pumpenlaufräder simultan antreibt.

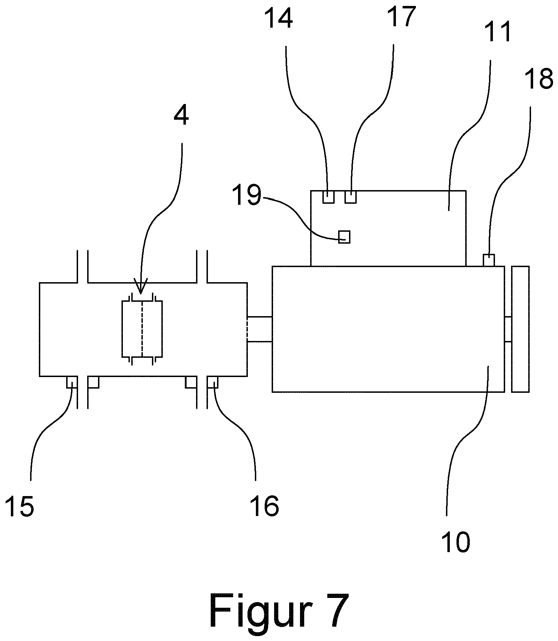

Figur 7 zeigt ein Umwälzmodul in einer weiteren Ausführungsform. Dabei zeigt Figur 7 alle für die Steuerung eines erfindungsgemäßen Umwälzmoduls notwendigen und/oder vorteilhaften (d.h. optionalen) Sensoren bzw. Erfassungseinheiten, welche die Inputparameter zur Steuerung der Drehzahl des Motors 10 an die Steuer- und Speiseinrichtung 11 liefern. Die Darstellung von Figur 7 verwendet dabei die Ausführungsform gemäß Figur 5, wobei der Übersichtlichkeit halber einige Details fortgelassen wurden. Die Übertragung auf alle anderen Ausführungsformen stellt für den Fachmann dabei keinerlei Schwierigkeit dar. Notwendige Inputparameter sind der OCV-Wert, welcher von der Messeinrichtung 4 bestimmt wird, und der Lade- bzw. Entladestrom, welcher von der Messeinrichtung 7 bestimmt wird. Alle Sensoren bzw. Erfassungseinheiten sind so mit der Steuer- und Speiseeinrichtung 11 verbunden, dass die erfassten Messwerte an diese übertragen werden können. Figur 7 zeigt diese Verbindungen der Übersichtlichkeit halber nicht. Optionale Sensoren bzw. Erfassungseinheiten sind Drucksensoren, von denen einer mit 15 bezeichnet ist, Temperatursensoren zur Messung der Temperatur des Elektrolyten, von denen einer mit 16 bezeichnet ist, ein Temperatursensor zur Messung der Wicklungstemperatur des Motors 10, welcher mit 18 bezeichnet ist, und ein Vibrationssensor zur Messung der vom Motor 10 verursachten Vibration, welcher mit 19 bezeichnet ist. Unter Vibrationssensoren werden alle Arten von Sensoren verstanden, welche in der Lage sind Vibrationen zu detektieren. Dazu gehören z.B. Beschleunigungssensoren (mm/s²) und Schwinggeschwindigkeitssensoren (mm/s). Temperatursensoren 16 zur Messung der Temperatur des Elektrolyten sind besonders dann wichtig, wenn die Batterie 1 und die Umgebung der Batterie 1 nicht temperiert sind, so dass die Temperatur der Batterie 1 den Temperaturschwankungen der Umgebung folgt. Manche Batterien 1 verfügen daher auch über eine Kühlung, welche z.B. in einem Elektrolyt-Luft-Wärmetauscher besteht. Temperaturschwankungen wirken sich auf die Viskosität des Elektrolyten aus. Außerdem unterliegt der Innenwiederstand der Zellen einer starken Temperaturabhängigkeit.

Die Drucksensoren 15 dienen dazu den Druck in den elektrolytfördernden Leitungen auf der Druckseite der Pumpenlaufräder 9.1 und 9.2 zu messen. Daher sind in Figur 7 diese Sensoren an den entsprechenden Leitungen außen am Pumpenkopf angeordnet. Sie könnten auch in den Pumpenkopf integriert sein oder auch entfernt vom Pumpenkopf an den Leitungen angebracht sein. Die Nähe zum Pumpenkopf hat jedenfalls den Vorteil, dass die Leitungen zwischen den Sensoren 15 und der Steuer- und Speiseeinrichtung 11 kurz sind. Dasselbe gilt für die Temperatursensoren 16. Diese könnten auch genauso gut auf der Saugseite der Pumpenlaufräder angeordnet sein. Der Temperatursensor 18 ist in Figur 7 außen am Motorgehäuse angeordnet. Dabei befindet er sich in der Nähe der Stromanschlüsse des Motors und kann so die Wicklungstemperatur zuverlässig erfassen. Er könnte auch in den Motor integriert sein, oder sich in der Steuer und Speiseeinrichtung 11 befinden.

Die Steuer- und Speiseeinrichtung 11 umfasst ferner einen Eingang für den Lade- bzw. Entladestrom, welcher mit 14 bezeichnet ist, und einen Eingang für die Klemmenspannung, welcher mit 17 bezeichnet ist. Wenn die zugehörigen Messeinrichtungen 5 und/oder 7 Teil der Batterie 1 sind, dann nehmen die genannten Eingänge die zugehörigen Verbindungsleitungen zu diesen Messeinrichtungen auf, so dass die Steuer- und Speiseeinrichtung 11 die zugehörigen Messwerte entgegennehmen kann. Wenn die zugehörigen Messeinrichtungen 5 und/oder 7 außerhalb der Batterie 1 angeordnet sind, dann werden die erfassten Messwerte in der Regel mit Hilfe eines Kommunikationsbusses übertragen. Im letzteren Fall nehmen die Eingänge 14 und/oder 17 die Verbindungsleitung zum Kommunikationsbus auf. Dabei können die Eingänge 14 und 17 auch einen einzigen Eingang bilden, welcher mit dem Kommunikationsbus verbunden ist.

Die Figur 7 unterscheidet sich von Figur 5 außerdem dadurch, dass die Steuer- und Speiseeinrichtung 11 direkt mit dem Motor 10 verbunden ist. Der Vorteil dieser Anordnung ist die Kompaktheit, welche es außerdem ermöglicht alle Verbindungsleitungen kurz zu halten. Außerdem kann der Vibrationssensor 19 dann innerhalb der Steuer- und Speiseeinrichtung 11 angeordnet sein, da sich vom Motor 10 erzeugte Vibrationen auf die Steuer- und Speiseeinrichtung 11 übertragen. Er könnte jedoch auch an oder im Motor 10 angeordnet sein.

Ein erfindungsgemäßes Umwälzmodul kann noch weitere in Figur 7 nicht dargestellte optionale Sensoren umfassen, wie beispielsweise Durchflusssensoren in beiden Elektrolytleitungen oder einen Körperschallsensor am Motor 10. Außerdem kann eine photometrische Messzelle in einem Pumpengehäuse integriert sein, mit welcher UV/Vis-Spektren aufgenommen werden können.

Figur 8 zeigt in schematischer Darstellung Details eines erfindungsgemäßen Umwälzmoduls in Bezug auf die Stromversorgung. Dabei kann zwischen externer und interner Stromversorgung umgeschaltet werden. Die Ausführungsform gemäß Figur 8 setzt dabei voraus, dass die externe Stromversorgung 6 auf Gleichstrom basiert. Die Steuer- und Speiseeinrichtung 11 umfasst eine Steuereinheit, welche mit 11.1 bezeichnet ist, eine Speiseeinheit, welche mit 11.2 bezeichnet ist, und ein Relais, welches mit 11.3 bezeichnet ist. Im Prinzip können die Einheiten 11.1, 11.2 und 11.3 auch separat ausgeführt sein, so dass in diesem Fall die Steuer- und Speiseeinrichtung 11 nur eine funktionale (und somit gedankliche) Einheit darstellt. Bei der Steuereinheit 11.1 handelt es sich in der Regel um einen Mikrokontroller. Die Speiseeinheit 11.2 ist ein DC/AC Frequenzumrichter, welcher auf der DC-Seite mit dem Relais 11.3 verbunden ist, und welcher auf der AC-Seite mit dem Motor 10 verbunden ist (nicht in Figur 8 dargestellt). Dabei ist der DC/AC Frequenzumrichter bevorzugt für eine DC-Eingangsspannung von 35 bis 80 Volt ausgelegt. Die Steuerleitungen, mit welchen die Steuereinheit 11.1 jeweils mit der Speiseeinheit 11.2 und dem Relais 11.3 verbunden ist, sind in Figur 8 durch die gestrichelten Linien angedeutet. Dabei steuerte die Steuereinheit 11.1 den Schaltzustand des Relais 11.3 und die Frequenz der AC-Seite der Speiseeinheit 11.2 (und damit die Drehzahl des Motors 10). Das Relais 11.3 ist mit der externen Stromversorgung 6 und mit der Zellanordnung 2 so verbunden, dass die Steuereinheit 11.1 zwischen externer Stromversorgung und interner Stromversorgung (aus der Zellanordnung 2) der Speiseeinheit 11.2 umschalten kann, indem es den Schaltzustand des Relais 11.3 entsprechend ansteuert. Die Steuereinheit 11.1 ist jeweils mit der externen und der internen Stromversorgung verbunden. Dazu umfasst die Steuereinheit 11.1 zwei separate DC/DC-Stellsetzer, welche so verschaltet sind, dass sich eine potentialgetrennte elektrische Versorgung der Steuereinheit 11.1 ergibt, wobei die Steuereinheit 11.1 auf diese Weise sowohl intern als auch extern mit Strom versorgt werden kann. Welche Stromversorgung dabei jeweils verwendet wird, legt die Steuereinheit 11.1 intern fest, wobei es natürlich vorteilhaft ist, wenn die Steuereinheit 11.1 genau dann intern versorgt wird, wenn auch die Speiseeinheit 11.2 intern versorgt wird.

Die Umschaltung der Stromversorgung durch die Steuereinheit 11.1 zwischen externer und interner Stromversorgung erfolgt dabei folgendermaßen. Zunächst wird die Leistung der Speiseeinheit 11.2 heruntergesetzt, wobei der Motor 10 aufgrund seiner Trägheit gebremst weiterrotiert. Dann wird das Relais 11.3 geschaltet, was dadurch stromlos bzw. nahezu stromlos erfolgen kann. Schließlich wird die Leistung der Speiseeinheit 11.2 wieder hochgesetzt. Damit es am Eingang der Speiseeinheit 11.2 beim Umschalten nicht zu abrupten Änderungen der Spannung kommen kann, ist ein oder sind mehrere entsprechend verschaltete Tiefpassglieder vorgesehen.

Die Fähigkeit zwischen externer und interner Stromversorgung umzuschalten hat folgende Vorteile:
- Black-Start-Fähigkeit (interne Stromversorgung)
- Vorladen der Batterie (externe Stromversorgung)
- Effizienzoptimierung (bzw. zur Entlastung des Hauptleistungspfades beim Entladen der Batterie)

Falls die Batterie Teil eines übergeordneten Batterie-Systems ist, z.B. eines Batterie-Strings, ergeben sich weitere Vorteile, indem das Umschalten zwischen interner und externer Stromversorgung zum Balancing oder in den Randbereichen des Ladezustandes eingesetzt wird. Als Regelgröße für das Balancing können dabei beispielsweise die Klemmenspannungen der einzelnen Batterien verwendet werden.

Das Verfahren zum Betreiben einer erfindungsgemäßen Batterie umfasst die folgenden Schritte:
- Erfassen von Messwerten
- Bestimmung einer Frequenz aus den erfassten Messwerten
- Speisung des Motors mit einem Wechselstrom mit der bestimmten Frequenz

Das Betriebsverfahren stellt dabei sicher, dass die Zellanordnung pro Zeiteinheit von einer ausreichenden Menge von Elektrolyt durchströmt wird. Bei der Bestimmung der dazu notwenigen Frequenz im zweiten Schritt werden in jedem Fall der Lade- bzw. Entladestrom (bzgl. Betrag und Vorzeichen) und der OCV-Wert als Messwerte verwendet. Falls mit Temperaturschwankungen des Elektrolyten zu rechnen ist, d.h. wenn die Batterie nicht temperiert ist, dann wird zusätzlich die Temperatur des Elektrolyten zur Bestimmung der Frequenz als Messwert verwendet. Außerdem gehen die Kennlinien der Pumpenlaufräder in die Bestimmung ein. Die Bestimmung der Frequenz kann dabei mit Hilfe von Tabellen oder über eine Funktion erfolgen.

Das Verfahren kann zusätzlich den folgenden Schritt umfassen:
- Ausgabe eines Fehlercodes, wenn erfasste Messwerte außerhalb eines vordefinierten Bereiches liegen

Dabei soll die Ausgabe des Fehlercodes sicherstellen, dass die Batterie nicht in einem Zustand betrieben wird, welcher eine Schädigung der Batterie zur Folge haben kann. Dies wäre z.B. dann der Fall, wenn die Zellanordnung pro Zeiteinheit nicht von einer ausreichenden Menge von Elektrolyt durchströmt würde. Dieser Fall kann beispielsweise eintreten, wenn der Motor nicht oder nicht ordnungsgemäß arbeitet. In einem solchen Fall würden beispielsweise der Vibrationssensor einen Wert liefern, welcher über einem vordefinierten Schwellwert liegt, oder ein Drucksensor würde einen Wert liefern, welcher unter (Motorausfall) oder über (Verstopfung im Elektrolytkreislauf) vordefinierten Schwellwerten liegt, oder der Temperatursensor zur Erfassung der Wicklungstemperatur würde einen Wert liefern, welcher über einem vordefinierten Schwellwert liegt. Analoges gilt für Durchflusssensoren und Körperschallsensoren. Im Allgemeinen können die erwähnten vordefinierten Schwellwerte auch von Parametern abhängen, wie z.B. den Betriebsparametern der Batterie, so dass die Schwellwerte variabel und eine Funktion dieser Parameter sind.

Das Verfahren kann zusätzlich den folgenden Schritt umfassen:
- Umschalten zwischen externer und interner Stromversorgung des Umwälzmoduls

Dabei erfolgt das Umschalten durch eine Änderung des Schaltzustandes des Relais 11.3. In der Regel wird dabei beim Laden auf externe Stromversorgung und beim Entladen auf interne Stromversorgung umgeschaltet. Dadurch wird beim Laden eine hohe Effizienz erreicht, und beim Entladen der Hauptleistungspfad der Batterie entlastet. Eine Umschaltung kann jedoch auch auf ein externes Steuersignal hin erfolgen, wobei in diesem Fall die im Vorhergehenden aufgestellte Regel nicht eingehalten zu werden braucht. Dies kann dann vorteilhaft sein, wenn die Batterie Teil eines übergeordneten Batterie-Systems ist (siehe oben).

### Bezugszeichenliste

- 1: Redox-Flow Batterie
- 2: Zellanordnung
- 3: Tankeinrichtung
- 4: Messeinrichtung zur Bestimmung der OCV
- 4.1: Messzelle
- 4.2: Messzelle
- 4.3: Messzelle
- 4.4: Referenzflüssigkeit
- 5: Messeinrichtung zur Bestimmung der Klemmenspannung
- 6: Externe Stromversorgung
- 7: Messeinrichtung zur Bestimmung des Lade- bzw. Entladestroms
- 8.1: Pumpenkopf
- 8.2: Pumpenkopf
- 9.1: Pumpenlaufrad
- 9.2: Pumpenlaufrad
- 10: Elektromotor
- 11: Steuer- und Speiseeinrichtung
- 11.1: Steuereinheit
- 11.2: Speiseeinheit
- 11.3: Relais
- 12: Lüfter
- 13: Getriebe
- 14: Eingang für Lade- bzw. Entladestrom
- 15: Drucksensor
- 16: Temperatursensor
- 17: Eingang für Klemmenspannung
- 18: Temperatursensor
- 19: Vibrationssensor

## Patentansprüche

1. Redox-Flow Batterie (1) umfassend eine Zellanordnung (2) und eine Tankeinrichtung (3) zur Aufnahme von Elektrolyt, wobei die Zellanordnung (2) eine Vielzahl von Redox-Flow-Zellen, und die Tankeinrichtung (3) wenigstens einen ersten Tank zur Aufnahme von Anolyt, wenigstens einen zweiten Tank zur Aufnahme von Katholyt und ein Rohrsystem zur Verbindung der Tanks mit der Zellanordnung (2) umfasst, und wobei die Batterie (1) eine Messeinrichtung (4) zur Bestimmung einer Leerlaufspannung und ein Umwälzmodul umfasst, welches so ausgebildet ist, dass es Anolyt und Katholyt umwälzen kann, und wobei die Messeinrichtung (4) zur Bestimmung einer Leerlaufspannung wenigstens eine Messzelle (4.1, 4.2, 4.3) und wenigstens vier Anschlüsse umfasst, wobei ein Anschluss für die Zufuhr von Anolyt, ein Anschluss für die Abfuhr von Anolyt, ein Anschluss für die Zufuhr von Katholyt und ein Anschluss für die Abfuhr von Katholyt vorgesehen ist, und wobei das Umwälzmodul wenigstens einen Pumpenkopf (8.1, 8.2) und wenigstens zwei Pumpenlaufräder (9.1, 9.2) umfasst, und wobei wenigstens ein Pumpenlaufrad (9.1, 9.2) im wenigstens einen Pumpenkopf (8.1, 8.2) angeordnet ist, **dadurch gekennzeichnet, dass** die wenigstens eine Messzelle (4.1, 4.2, 4.3) in den Pumpenkopf (8.1, 8.2) integriert ist, und wobei ein Anschluss der Messeinrichtung (4) mit einer Druckseite des im Pumpenkopf (8.1, 8.2) angeordneten Pumpenlaufrades (9.1, 9.2) verbunden ist, und wobei die zugehörige Verbindungsleitung in den Pumpenkopf (8.1, 8.2) integriert ist.

2. Redox-Flow Batterie (1) nach Anspruch 1, wobei ein weiterer Anschluss der Messeinrichtung (4) mit einer Saugseite des im Pumpenkopf (8.1, 8.2) angeordneten Pumpenlaufrades (9.1, 9.2) verbunden ist, und wobei die zugehörige Verbindungsleitung in den Pumpenkopf (8.1, 8.2) integriert ist.

3. Redox-Flow Batterie (1) nach Anspruch 1 oder 2, wobei das Umwälzmodul zwei Pumpenköpfe (8.1, 8.2) mit je einem Pumpenlaufrad (9.1, 9.2) umfasst, und die Messeinrichtung (4) zur Bestimmung einer Leerlaufspannung zwei Messzellen (4.2, 4.3) umfasst, und wobei in jedem der Pumpenköpfe (8.1, 8.2) je eine der Messzellen (4.2, 4.3) integriert sind.

4. Redox-Flow Batterie (1) nach Anspruch 1 oder 2, wobei das Umwälzmodul genau einen Pumpenkopf (8.1) mit zwei Pumpenlaufräder (9.1, 9.2) umfasst.

5. Redox-Flow Batterie (1) nach Anspruch 4, wobei die Messeinrichtung (4) zur Bestimmung einer Leerlaufspannung zwei Messzellen (4.2, 4.3) umfasst, und wobei im Pumpenkopf (8.1) beide Messzellen (4.2, 4.3) integriert sind.

6. Redox-Flow Batterie (1) nach einem der vorhergehenden Ansprüche, wobei das Umwälzmodul einen drehzahlvariablen Elektromotor (10) umfasst, welcher so mit den Pumpenlaufrädern (9.1, 9.2) verbunden ist, dass er dieselben simultan antreiben kann, und wobei das Umwälzmodul eine Steuer- und Speiseeinrichtung (11) umfasst, welche so ausgebildet und mit dem Elektromotor (10) verbunden ist, dass sie denselben mit einem Wechselstrom mit variabler Frequenz speisen kann.

7. Redox-Flow Batterie (1) nach Anspruch 6, wobei die Steuer- und Speiseeinrichtung (11) direkt mit dem Motor (10) verbunden ist.

8. Redox-Flow Batterie (1) nach einem der Ansprüchen 6 bis 7, wobei die Steuer- und Speiseeinrichtung (11) einen Eingang für den Lade- bzw. Entladestrom der Batterie (1) umfasst.

9. Redox-Flow Batterie (1) nach einem der Ansprüchen 6 bis 8, wobei die Steuer- und Speiseeinrichtung (11) einen Eingang für die Klemmenspannung der Batterie (1) umfasst.

10. Redox-Flow Batterie (1) nach einem der Ansprüche 6 bis 9, wobei das Umwälzmodul eines oder mehrere der folgenden Elemente umfasst: Drucksensor (15), Temperatursensor (16) zur Messung der Temperatur des Elektrolyten, Temperatursensor (18) zur Messung der Temperatur der Wicklung des Elektromotors (10), Vibrationssensor (19), Durchflusssensor, Körperschallsensor.

11. Redox-Flow Batterie (1) nach einem der Ansprüche 6 bis 10, wobei die Batterie (1) eine externe Gleichstromversorgung (6) umfasst, und die Steuer- und Speiseeinrichtung (11) eine Steuereinheit (11.1), eine Speiseeinheit (11.2) und ein Relais (11.3) umfasst, und wobei die Speiseeinheit (11.2) als DC/AC Frequenzumrichter ausgebildet ist, welcher auf der DC-Seite mit dem Relais (11.3) und auf der AC-Seite mit dem Elektromotor (10) verbunden ist, und wobei die Steuereinheit (11.1) so mit dem Relais (11.3) verbunden ist, dass die Steuereinheit (11.1) den Schaltzustand des Relais (11.3) bestimmen kann, und wobei die Steuereinheit (11.1) so mit der Speiseeinheit (11.2) verbunden ist, dass die Steuereinheit (11.1) die Frequenz der AC-Seite der Speiseeinheit (11.2) bestimmen kann, und wobei das Relais (11.3) so mit der externen Gleichstromversorgung (6) und mit der Zellanordnung (2) verbunden ist, dass je nach Schaltzustand des Relais (11.3) die Speiseeinheit (11.2) entweder mit der externen Gleichstromversorgung (6) oder mit der Zellanordnung (2) verbunden ist, und wobei die Steuereinheit (11.1) jeweils mit der externen Gleichstromversorgung (6) und mit der Zellanordnung (2) verbunden ist.

12. Verfahren zum Betrieb einer Redox-Flow Batterie (1) gemäß einem der Ansprüche 8 bis 11, wobei das Verfahren die folgenden Schritte umfasst:
- Erfassen von Messwerten;
- Bestimmung einer Frequenz aus den erfassten Messwerten;
- Speisung des Motors mit einem Wechselstrom mit der bestimmten Frequenz;
wobei als Messwerte die Leerlaufspannung und der Lade- bzw. Entladestrom verwendet werden, und wobei beim Lade- bzw. Entladestrom sowohl Betrag als auch das Vorzeichen des Stroms verwendet wird.

13. Verfahren nach Anspruch 12 zum Betrieb einer Redox-Flow Batterie (1) gemäß einem der Ansprüche 10 oder 11, wobei das Verfahren den folgenden Schritt umfasst:
- Ausgabe eines Fehlercodes, wenn erfasste Messwerte außerhalb eines vordefinierten Bereiches liegen.

14. Verfahren nach Anspruch 12 oder 13 zum Betrieb einer Redox-Flow Batterie (1) gemäß Anspruch 11, wobei das Verfahren den folgenden Schritt umfasst:
- Ändern des Schaltzustandes des Relais (11.3);
wobei der Schaltzustand des Relais (11.3) so gewählt wird, dass beim Laden die Speiseeinheit (11.2) mit der externen Gleichstromversorgung (6) und beim Entladen die Speiseeinheit (11.2) mit der Zellanordnung (2) verbunden ist.

15. Verfahren nach Anspruch 12 oder 13 zum Betrieb einer Redox-Flow Batterie (1) gemäß Anspruch 11, wobei das Verfahren den folgenden Schritt umfasst:
- Ändern des Schaltzustandes des Relais (11.3);
wobei der Schaltzustand des Relais (11.3) auf ein externes Steuersignal hin erfolgt.

## Claims

1. A redox flow battery (1) comprising a cell arrangement (2) and a tank facility (3) for receiving electrolyte, wherein the cell arrangement (2) comprises a plurality of redox flow cells, and the tank facility (3) comprises at least one first tank for receiving anolyte, at least one second tank for receiving catholyte and a piping system for connecting the tanks to the cell arrangement (2), and wherein the battery (1) comprises a measuring device (4) for determining an open-circuit voltage and a circulation module which is designed such that it can circulate anolyte and catholyte, and wherein the measuring device (4) for determining an open-circuit voltage comprises at least one measuring cell (4.1, 4.2, 4.3) and at least four connections, wherein a connection for the feeding of anolyte, a connection for the removal of anolyte, a connection for the feeding of catholyte and a connection for the removal of catholyte are provided, and wherein the circulation module comprises at least one pump head (8.1, 8.2) and at least two pump impellers (9.1, 9.2), and wherein at least one pump impeller (9.1, 9.2) is arranged in the at least one pump head (8.1, 8.2), **characterized in that** the at least one measuring cell (4.1, 4.2, 4.3) is integrated in the pump head (8.1, 8.2), and a connection of the measuring device (4) is connected to a pressure side of the pump impeller (9.1, 9.2) arranged in the pump head (8.1, 8.2), and the associated interconnection line is integrated in the pump head (8.1, 8.2).

2. Redox flow battery (1) according to claim 1, wherein a further connection of the measuring device (4) is connected to a suction side of the pump impeller (9.1, 9.2) arranged in the pump head (8.1, 8.2), and wherein the associated interconnection is integrated in the pump head (8.1, 8.2).

3. Redox flow battery (1) according to claim 1 or 2, wherein the circulation module comprises two pump heads (8.1, 8.2) each with a pump impeller (9.1, 9.2), and the measuring device (4) for determining an open-circuit voltage comprises two measuring cells (4.2, 4.3), and wherein one of the measuring cells (4.2, 4.3) is integrated in each of the pump heads (8.1, 8.2).

4. Redox flow battery (1) according to claim 1 or 2, wherein the circulation module comprises exactly one pump head (8.1) with two pump impellers (9.1, 9.2).

5. Redox flow battery (1) according to claim 4, wherein the measuring device (4) for determining an open-circuit voltage comprises two measuring cells (4.2, 4.3), and wherein both measuring cells (4.2, 4.3) are integrated in the pump head (8.1).

6. A redox flow battery (1) according to any one of the preceding claims, wherein the circulation module comprises a variable speed electric motor (10) connected to the pump impellers (9.1, 9.2) so as to be able to drive them simultaneously, and wherein the circulation module comprises a control and feeding facility (11) adapted and connected to the electric motor (10) so as to be able to feed it with a variable frequency alternating current.

7. Redox flow battery (1) according to claim 6, wherein the control and feeding facility (11) is directly connected to the motor (10).

8. Redox flow battery (1) according to any one of claims 6 to 7, wherein the control and feeding facility (11) comprises an input for the charge or discharge current of the battery (1).

9. A redox flow battery (1) according to any one of claims 6 to 8, wherein the control and feeding facility (11) comprises an input for the terminal voltage of the battery (1).

10. A redox flow battery (1) according to any one of claims 6 to 9, wherein the circulation module comprises one or more of the following: Pressure sensor (15), temperature sensor (16) for measuring the temperature of the electrolyte, temperature sensor (18) for measuring the temperature of the winding of the electric motor (10), vibration sensor (19), flow sensor, structure-borne sound sensor.

11. Redox flow battery (1) according to any one of claims 6 to 10, wherein the battery (1) comprises an external DC power supply (6), and the control and feeding facility (11) comprises a control unit (11.1), a feeding unit (11.2) and a relay (11.3), and wherein the feeding unit (11.2) is designed as a DC/AC frequency converter which is connected to the relay (11.3) on the DC side and to the electric motor (10) on the AC side, and the control unit (11.1) being connected to the relay (11.3) in such a way that the control unit (11.1) can determine the switching status of the relay (11.3), and wherein the control unit (11.1) is connected to the power supply unit (11.2) such that the control unit (11.1) can determine the frequency of the AC side of the power supply unit (11.2), and wherein the relay (11.3) is connected to the external DC power supply (6) and to the cell arrangement (2) such that, depending on the switching status of the relay (11.3), the power supply unit (11.2) is connected either to the external DC power supply (6) or to the cell arrangement (2), and wherein the control unit (11.1) is connected respectively to the external DC power supply (6) and to the cell arrangement (2).

12. A method of operating a redox flow battery (1) according to any one of claims 8 to 11, the method comprising the steps of: - detecting measured values;
- determining a frequency from the detected measured values;
- supplying the motor with an alternating current having the determined frequency;
wherein the measured values used are the open-circuit voltage and the charging or discharging current, and wherein both magnitude and sign of the current are used in the charging or discharging current.

13. A method according to claim 12 for operating a redox flow battery (1) according to any one of claims 10 or 11, the method comprising the step of:
- outputting an error code when measured values detected are outside a predefined range.

14. A method according to claim 12 or 13 for operating a redox flow battery (1) according to claim 11, the method comprising the step of: - changing the switching status of the relay (11.3);
wherein the switching status of the relay (11.3) is selected such that during charging the power supply unit (11.2) is connected to the external DC power supply (6) and during discharging the power supply unit (11.2) is connected to the cell arrangement (2).

15. A method according to claim 12 or 13 for operating a redox flow battery (1) according to claim 11, the method comprising the step of: - changing the switching status of the relay (11.3);
wherein the switching status of the relay (11.3) is in response to an external control signal.

## Revendications

1. Batterie à flux redox (1) comprenant une disposition des cellules (2) et un dispositif de réservoir (3) pour contenir de l'électrolyte, la disposition des cellules (2) comprenant une pluralité de cellules à flux redox, et le dispositif de réservoir (3) comprenant au moins un premier réservoir pour contenir de l'anolyte, au moins un deuxième réservoir pour contenir du catholyte, et un système de tuyaux pour connecter les réservoirs à la disposition des cellules (2), et dans lequel la batterie (1) comprend un dispositif de mesure (4) pour déterminer une tension à vide et un module de recirculation qui est conçu pour faire circuler l'anolyte et le catholyte, et dans lequel le dispositif de mesure (4) pour déterminer une tension à vide comprend au moins une cellule de mesure (4.1, 4.2, 4.3) et au moins quatre raccordements, un raccordement étant prévu pour l'alimentation en anolyte, un raccordement pour la collecte de l'anolyte, un raccordement pour l'alimentation en catholyte et un raccordement pour la collecte du catholyte, et le module de recirculation comprenant au moins une tête de pompe (8.1, 8.2) et au moins deux roues de pompe (9.1, 9.2), et au moins une roue de pompe (9.1, 9.2) étant prévue pour la collecte de l'anolyte.2) est disposé dans au moins une tête de pompe (8.1, 8.2), **caractérisé en ce que** l'au moins une cellule de mesure (4.1, 4.2, 4.3) est intégrée dans la tête de pompe (8.1, 8.2), et un raccordement du dispositif de mesure (4) est relié à un côté refoulement de la roue de pompe (9.1, 9.2) disposée dans la tête de pompe (8.1, 8.2), et la ligne de jonction correspondante est intégrée dans la tête de pompe (8.1, 8.2).

2. Batterie à flux redox (1) selon la revendication 1, dans laquelle un autre raccordement du dispositif de mesure (4) est relié à un côté aspiration de la roue de pompe (9.1, 9.2) disposée dans la tête de pompe (8.1, 8.2), et dans laquelle la ligne de jonction correspondante est intégrée dans la tête de pompe (8.1, 8.2).

3. Batterie à flux redox (1) selon la revendication 1 ou 2, dans laquelle le module de recirculation comprend deux têtes de pompe (8.1, 8.2) avec chacune une roue de pompe (9.1, 9.2), et le dispositif de mesure (4) pour déterminer une tension à vide comprend deux cellules de mesure (4.2, 4.3), et dans laquelle une des cellules de mesure (4.2, 4.3) est intégrée dans chacune des têtes de pompe (8.1, 8.2).

4. Batterie à flux redox (1) selon la revendication 1 ou 2, dans laquelle le module de recirculation comprend exactement une tête de pompe (8.1) avec deux roues de pompe (9.1, 9.2).

5. Batterie à flux redox (1) selon la revendication 4, dans laquelle le dispositif de mesure (4) comprend deux cellules de mesure (4.2, 4.3) pour déterminer une tension à vide, et dans laquelle les deux cellules de mesure (4.2, 4.3) sont intégrées dans la tête de pompe (8.1).

6. Batterie à flux redox (1) selon l'une quelconque des revendications précédentes, dans laquelle le module de recirculation comprend un moteur électrique (10) à vitesse variable relié aux roues de pompe (9.1, 9.2) de manière à pouvoir les entraîner simultanément, et dans laquelle le module de recirculation comprend un dispositif de commande et d'alimentation (11) agencé et relié au moteur électrique (10) de manière à pouvoir alimenter ce dernier avec un courant alternatif à fréquence variable.

7. Batterie à flux redox (1) selon la revendication 6, dans laquelle le dispositif de commande et d'alimentation (11) est directement relié au moteur (10).

8. Batterie à flux redox (1) selon l'une quelconque des revendications 6 à 7, dans laquelle le dispositif de commande et d'alimentation (11) comprend une entrée pour le courant de charge ou de décharge de la batterie (1).

9. Batterie à flux redox (1) selon l'une quelconque des revendications 6 à 8, dans laquelle le dispositif de commande et d'alimentation (11) comprend une entrée pour la tension aux bornes de la batterie (1).

10. Batterie à flux redox (1) selon l'une quelconque des revendications 6 à 9, dans laquelle le module de recirculation comprend un ou plusieurs des éléments suivants : Capteur de pression (15), Capteur de température (16) pour mesurer la température de l'électrolyte, Capteur de température (18) pour mesurer la température de l'enroulement du moteur électrique (10), Capteur de vibrations (19), Capteur de débit, Capteur de bruit de structure.

11. Batterie à flux redox (1) selon l'une quelconque des revendications 6 à 10, dans laquelle la batterie (1) comprend une alimentation en courant continu externe (6), et le dispositif de commande et d'alimentation (11) comprend une unité de commande (11.1), une unité d'alimentation (11.2) et un relais (11.3), et dans laquelle l'unité d'alimentation (11.2) est conçue comme un convertisseur de fréquence DC/AC qui est relié au relais (11.3) du côté DC et au moteur électrique (10) du côté AC, et dans laquelle l'unité de commande (11.1) est reliée au relais (11.3) de telle sorte que l'unité de commande (11.1) peut déterminer l'état de commutation du relais (11.3).3), et dans lequel l'unité de commande (11.1) est reliée à l'unité d'alimentation (11.2) de telle sorte que l'unité de commande (11.1) peut déterminer la fréquence du côté CA de l'unité d'alimentation (11.2), et dans lequel le relais (11.3) est relié à l'alimentation en courant continu externe (6) et à la disposition des cellules (2) de telle sorte que, selon l'état de commutation du relais (11.3), l'unité d'alimentation (11.2) est reliée soit à l'alimentation en courant continu externe (6), soit à la disposition des cellules (2), et dans lequel l'unité de commande (11.1) est reliée respectivement à l'alimentation en courant continu externe (6) et à la disposition des cellules (2).

12. Procédé de fonctionnement d'une batterie à flux redox (1) selon l'une quelconque des revendications 8 à 11, ledit procédé comprenant les étapes suivantes :
- acquisition de valeurs mesurées ;
- détermination d'une fréquence à partir des valeurs mesurées acquises ;
- alimentation du moteur avec un courant alternatif à la fréquence déterminée ;
dans lequel on utilise comme valeurs mesurées la tension à vide et le courant de charge ou de décharge, et dans lequel, pour le courant de charge ou de décharge, on utilise à la fois la valeur et le signe du courant.

13. Procédé selon la revendication 12 pour faire fonctionner une batterie à flux redox (1) selon l'une des revendications 10 ou 11, ledit procédé comprenant l'étape suivante :
- Émission d'un code d'erreur lorsque les valeurs mesurées détectées sont en dehors d'une plage prédéfinie.

14. Procédé selon la revendication 12 ou 13 pour faire fonctionner une batterie à flux redox (1) selon la revendication 11, ledit procédé comprenant l'étape suivante : -
Changer l'état de commutation du relais (11.3) ;
dans lequel l'état de commutation du relais (11.3) est choisi de telle sorte que, lors de la charge, l'unité d'alimentation (11.2) est connectée à l'alimentation en courant
continu externe (6) et, lors de la décharge, l'unité d'alimentation (11.2) est connectée à la disposition des
cellules (2).

15. Procédé selon la revendication 12 ou 13 pour faire fonctionner une batterie à flux redox (1) selon la revendication 11, ledit procédé comprenant l'étape suivante : -
Modifier l'état de commutation du relais (11.3) ;
dans lequel l'état de commutation du relais (11.3) étant effectué en réponse à un signal de commande externe.
